Europäisches Patentamt

European Patent Office

Office européen des brevets

(19)

(11) Veröffentlichungsnummer : **0 020 296**
**B1**

(12) **EUROPÄISCHE PATENTSCHRIFT**

(45) Veröffentlichungstag der Patentschrift :
01.06.83

(51) Int. Cl.³ : **F 21 S 11/00**, E 06 B 9/24,
E 04 B 1/74

(21) Anmeldenummer : 80810150.5

(22) Anmeldetag : 05.05.80

(54) Verfahren und Mittel zur Steuerung der Strahlungsenergie im gesamten spektralen Bereich in Räumen.

(30) Priorität : 05.06.79 CH 5180/79

(43) Veröffentlichungstag der Anmeldung :
10.12.80 Patentblatt 80/25

(45) Bekanntmachung des Hinweises auf die Patenterteilung : 01.06.83 Patentblatt 83/22

(84) Benannte Vertragsstaaten :
AT BE CH DE FR GB IT LI LU NL SE

(56) Entgegenhaltungen :
CH A 441 190
DE B 2 658 312
DE C 631 798
FR A 493 788
US A 2 572 957

(73) Patentinhaber : **Relium AG**
**Jurastrasse 546**
**CH-5102 Rupperswil (CH)**

(72) Erfinder : **Züllig, Harry T.**
**Residenza Collina d'Oro**
**CH-6926 Montagnola (CH)**

(74) Vertreter : **Gasser, François W.**
**Hirschengraben 10 Postfach 1555**
**CH-3001 Bern (CH)**

EP 0 020 296 B1

# Verfahren und Mittel zur Steuerung der Strahlungsenergie im gesamten spektralen Bereich in Räumen

Die vorliegende Erfindung betrifft einerseits ein Verfahren zur Steuerung der Strahlungsenergie im gesamten spektralen Bereich, welche Energien z. B. durch Fenster in einem Raum einstrahlen oder in ihm erzeugt werden und wo sie nach Bedarf zu verteilen sind.

Andererseits betrifft die vorliegende Erfindung eine Einrichtung zur Durchführung dieses Verfahrens, die eine gezielte Steuerung der gesamten Strahlungsenergien ermöglichen.

In der konventionellen Bau- und Klimatechnik wird durch Isolationsmassnahmen versucht, raumexterne natürliche Energien, insbesondere Wärmestrahlungen, vom Raum fernzuhalten, um mittels Heizungs- und Kühlanlagen möglichst konstante Raumbedingungen zu erzielen. Diese Isolationsmassnahmen bestehen im Bereich der Fenster im wesentlichen aus Storen, Reflektionsoder Absorptionsgläsern, Vordächern und Vorhängen, welche Elemente dazu führen, dass auch wesentliche Teile des ausserhalb der Fenster vorhandenen Lichtes das Bauinnere gar nicht erreichen und somit durch elektrische Beleuchtungskörper ersetzt werden müssen. Mit den bekannten Techniken ist es ferner praktisch unmöglich, die speziell in der warmen Jahreszeit durch die Fenster in den Raum einstrahlende Wärmestrahlung anders als durch energieverzehrende Klimaanlagen zu absorbieren. Aus ökologischen und immer mehr aus wirtschaftlichen Gründen ist es unbedingt notwendig, die für die Raumkonditionierung benötigte Fremdenergie auf ein Mindestmass zu reduzieren. Zudem ist es wünschenswert, die in klimatisierten Räumen häufig ungenügenden Behaglichkeitsbedingungen wesentlich zu verbessern, um sowohl das Wohlbefinden als auch das Leistungsniveau der sich im Raum aufhaltenden Menschen zu erhöhen.

Dabei ist davon auszugehen, daß die Behaglichkeit von Personen in Räumen weitgehend von den Strahlungsenergien Licht, Wärme und Schall beeinflußt wird, und daß für die Steuerung dieser Energien möglichst ohne Verwendung von Fremdenergie, vorwiegend in Form von Elektrizität, ausgekommen werden muß.

Man kennt bereits zahlreiche Lösungsvorschläge in dieser Hinsicht, so z. B. die in der DE-C-631 798 (Junkers) und den US-A-2 097 738 (Oita), US-A-4 198 953 (Power) und US-A-4 223 663 (Carmichael et al) vorgeschlagenen Ausgestaltungen von Räumen und Raumdecken, die Ausbildungen von Fenstern mit Reflektoren gemäß der CH-A-441 190 (Talium AG), der FR-A-493 788 (Wilson), und der US-A 721 258 (Wadsworth), US-A-2 572 957 (Shaw) und US-A-2 665 610 (Harrison), einer Dachkuppel gemäß US-A-2 006 648 (Nobbs) und der DE-B-2 658 312 (Bernhardt), sowie schließlich Vorschläge betreffend Reflektoren besonderer Bauart, wie die in den CA-A-345 198 (Begge et al) und CA-A-347 626 (Gallians) beschriebenen.

Diese bekannten Vorschläge erfüllen jedoch die oben genannten Forderungen nur unvollständig, was insbesondere auch für die obenerwähnten bekannten Ausgestaltungen von Fenstern oder Dachkuppeln gilt, oder nur mit Mitteln von zu hohem Aufwand.

Der vorliegenden Erfindung liegt daher die Aufgabe zugrunde, sowohl ein Verfahren als auch eine Einrichtung zu entwickeln, um durch optimale Steuerung der gesamten in einem Raum auftretenden Strahlungsenergien, zumindest im ganzen spektralen Bereich, sowohl gute Behaglichkeitsbedingungen im Raum zu schaffen, als auch die Notwendigkeit, dafür Fremdenergie einzusetzen, minimal zu halten, indem in dem mit Energie zu füllenden Raum lokale überstrahlte Zonen vermieden und Zonen, die von den Strahlungsquellen entfernt liegen, mit diffusen Strahlen versorgt werden.

Diese Aufgabe wird erfindungsgemäß durch ein Verfahren gemäß dem kennzeichnenden Teil des Patentanspruches 1 und die Einrichtung gemäß dem kennzeichnenden Teil des Anspruches 2 gelöst.

Hierdurch ermöglicht es die Erfindung, ohne Einsatz von Fremdenergie im gesamten Raum möglichst vorteilhafte Bedingungen zu schaffen, insbesondere bezüglich Licht, Wärme und Schall.

Das erfindunsgemäße Verfahren und die Einrichtung zu seiner Durchführung sind nicht nur bei Neubauten sinnvoll einsetzbar, indem sie Klimaanlagen weitgehend überflüssig machen, sondern sie eignen sich auch für die nachträgliche Verwendung in Altbauten.

Dabei wird die Erhöhung der Behaglichkeitsbedingungen betreffend Licht, Wärme und Schall nicht durch wesentliche Nachteile auf anderen Gebieten erkauft.

Einzelheiten von Ausführungsbeispielen der Erfindung ergeben sich aus der nachfolgenden Beschreibung, welche sich auf die Zeichnung bezieht, in welcher

Figur 1 das erfindungsgemässe Verfahren anhand eines Längsschnittes durch einem Raum schematisch erläutert,

Figur 2 die Situation in einem Raum illustriert, in welchem weder das erfindungsgemässe Verfahren noch die entsprechenden Mittel verwendet werden.

Figur 3 einen Querschnitt durch ein Fenster zeigt, in welchem erfindungsgemässe Reflektoren eingebaut sind,

Figur 4 eine erste Ausführungsvariante solcher Reflektoren in perspektivischer Darstellung zeigt,

Figur 5 eine zweite Ausführungsvariante derartiger Reflektoren in perspektivischer Darstellung illustriert,

Figur 6 eine erste Ausführungsform einer Deckenplatte in perspektivischer Ansicht zeigt,

Figur 7 eine zweite Ausführungsform einer Deckenplatte in perspektivischer Ansicht illustriert,

Figur 8 einen Längsschnitt durch einen Teil einer solchen Deckenplatte zeigt,

Figur 9 eine perspektivische Darstellung einer Prismen-Enzelkombination in einer Deckenplatte zeigt,

Figur 10 eine perspektivische Darstellung einer ersten Ausführungsform einer Lichtkuppel als weiteres erfindungsgemässes Mittel zeigt,

Figur 11 einen Querschnitt durch eine zweite Ausführungsform einer Lichtkuppel, kombiniert mit zwei künstlichen Licht-quellen, zeigt, und

Figur 12 einen Leuchtkörper zeigt, welcher ein weiteres erfindungsgemässes Mittel darstellt.

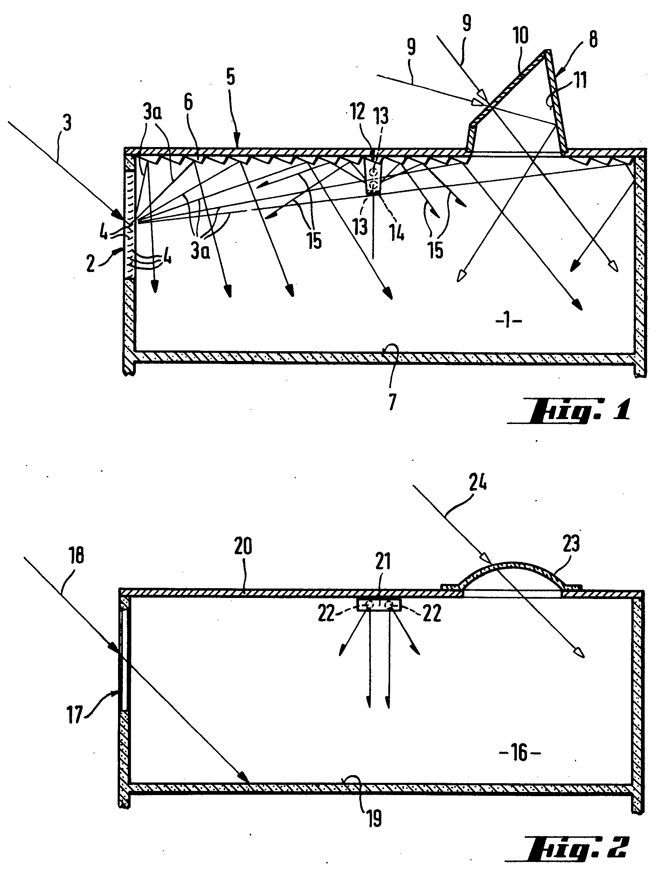

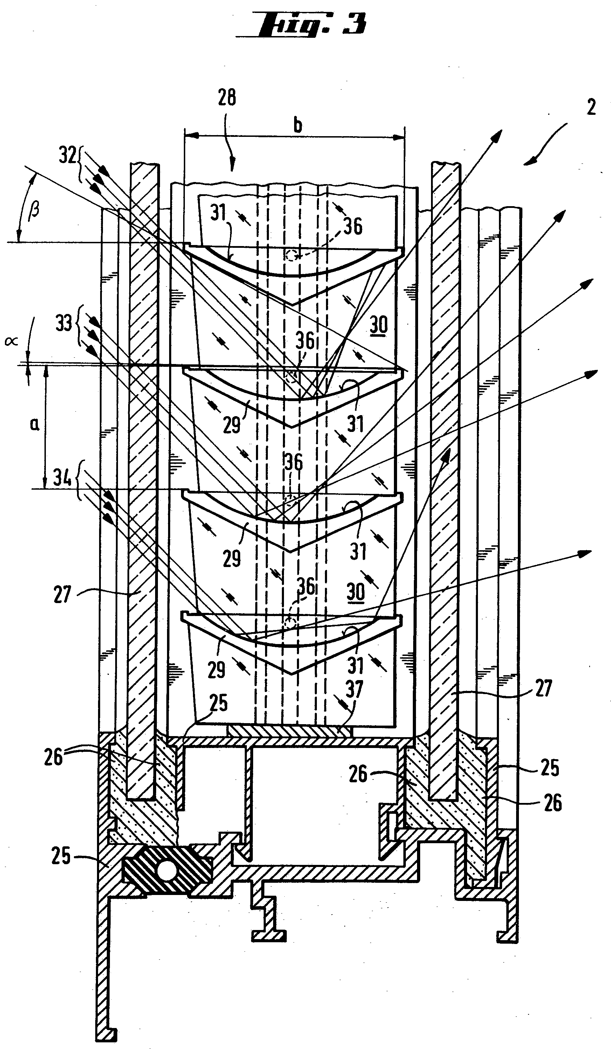

Anhand von Fig. 1 läßt sich sowohl das erfindungsgemäße Verfahren als auch die erfindungsgemäße Einrichtung zu dessen Durchführung prinzipiell erläutern.

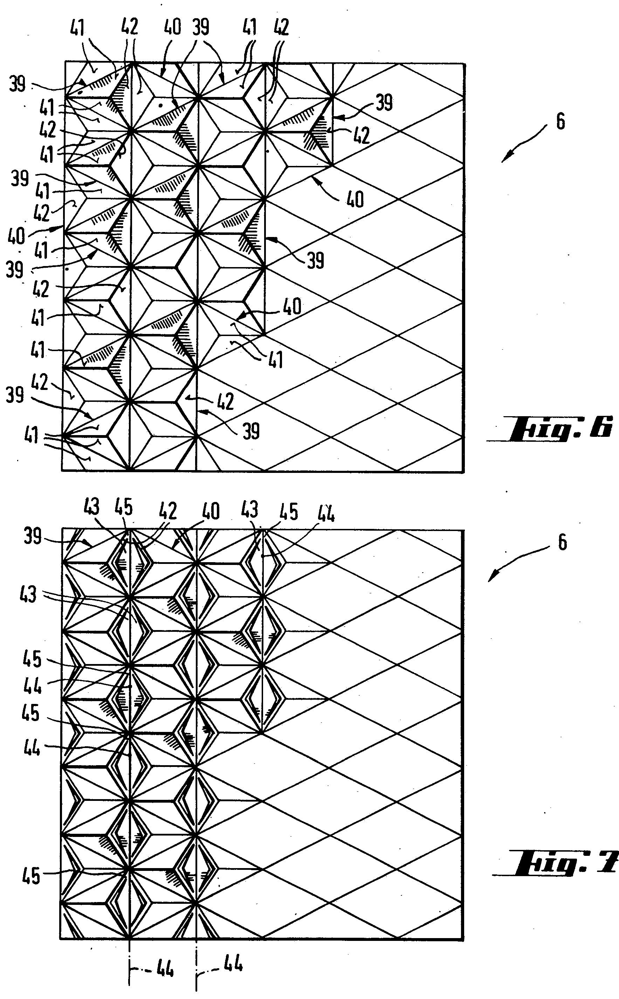

Jede im Raum 1 auftretende Strahlung im gesamten spektralen Bereich wird möglichst weitgehend gesteuert, wobei es dabei im wesentlichen darum geht, diese Stahlungen diffus zu reflektieren und möglichst gleichmässig über den gesamten Raum 1 zu streuen. Dies wird im dargestellten Beispiel anhand von im Raum 1 auftretenden Lichtstrahlungen erläutert. In den im Querschnitt gezeigten Raum 1 tritt einerseits durch ein Fenster 2 Sonnenstrahlung 3 ein. Diese wird, wie weiter unten anhand der Fig. 3 bis 5 erläutert ist, im Fenster 2 selber durch Reflektoren 4 gezielt abgelenkt, so dass sie die Raumdecke 5 diffus bestrahlt. Eine direkte Einstrahlung der Sonnenstrahlung 3 in den Raum 1 wird durch die Reflektoren 4 weitgehend behindert.

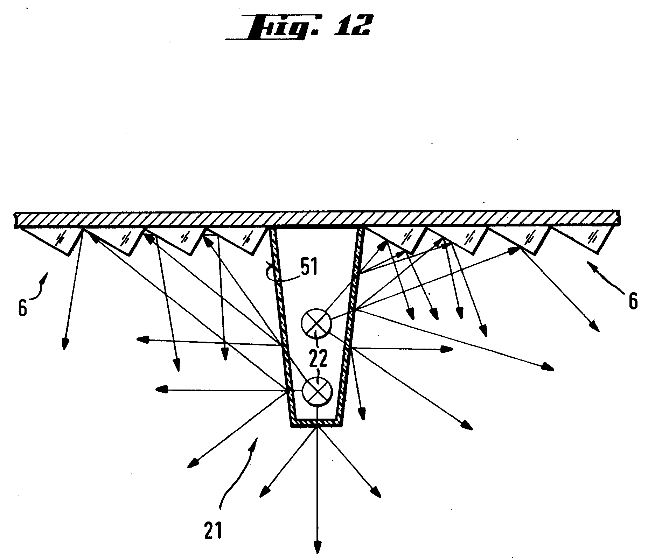

An den anhand der Fig. 6 bis 9 im Detail beschriebenen erfindungsgemäßen Deckenelementen 6, welche das wesentlichste Merkmal der Erfindung darstellen, wird die von einer externen Strahlungsquelle 3, z. B. der Sonne herstammende Strahlung, die vorzugsweise von Reflektoren 4 des Fensters 2 in eine diffuse indirekte Strahlung 3a ungewandelt wurde, gezielt abgelenkt, derart, daß sie gegen den Raumboden 7 strahlt. Dieser wird daher durch diffuses Licht, z. B. Sonnenlicht gleichmäßig beleuchtet. Stellen mit übermäßiger Helligkeit treten nicht auf.

Zusätzlich kann durch eine Dachkuppel 8 in den Raum 1 eintretende Sonnenstrahlung 9 teilweise durch das geneigte Fenster 10 direkt in den Raum 1 abgestrahlt, teilweise durch das geneigte Fenster 10 direkt in den Raum 1 abgestrahlt, teilweise aber von der Kuppelwandung 11 umgelenkt indirekt in den Raum 1 abgestrahlt werden.

Als weitere Strahlungsquellen 12 können im Raum 1 Lampen oder Leuchten verwendet werden. Deren Aufbau und Wirkungsweise im Rahmen der vorliegenden Erfindung wird anhand einer Neonleuchte 12 beschrieben, wobei Details der Leuchte anhand der Fig. 12 beschrieben, wobei Details der Leuchte anhand der Fig. 12 erläutert werden. Das durch die Leuchtröhren 13 erzeugte Licht wird dank der Abdeckung 14 diffus im Raum 1 verteilt, wobei ein bedeutender Anteil der Leuchtenstrahlung an die Deckenelemente 6 geworfen wird, von wo er auf eine große Raumfläche diffus abgestrahlt wird, wie dies die Pfeile 15 andeuten. Damit dieser Effekt möglichst wirkungsvoll ausgenützt werden kann, ist vorzugsweise die Lichtquelle, hier die Leuchtröhren 13, von den Deckenelementen 6 abgesetzt.

Die Figur 1 zeigt deutlich, daß sämtliche im Raum 1 vorhandenen Strahlungen mittels der erfindungsgemäßen Elemente, nämlich vor allem der Deckenelemente 6, und gegebenenfalls des Fensters 2 mit Reflektoren 4, der Lichtkuppel 8 und der Lichtquelle 12, gezielt gesteuert und im Raum 1 möglichst optimal verteilt werden, wobei diese Verteilung vorteilhafterweise vollständig diffus erfolgt.

Zonen mit übermäßiger Helligkeit können, durch Anwendung des erfindungsgemäßen Verfahrens und der erfindungsgemäßen Einrichtung daher im Raum 1 vermieden werden. Gleichzeitig kann der Raum 1, insbesondere in seinen vom Fenster 2 entfernt liegenden Bereichen, selbst ohne Verwendung der Dachkuppel 8, wesentlich besser mit Tageslicht versorgt werden, als die ohne Anwendung der Erfindung möglich wäre.

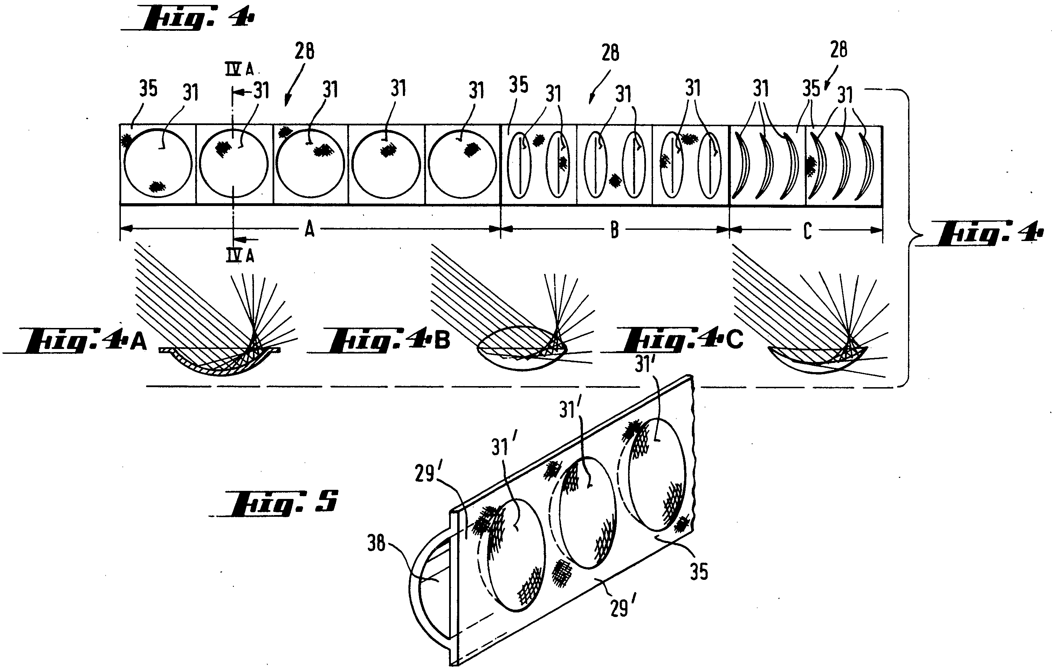

Das letztere ist anhand von Fig. 2, wo ein Raum 16 im Querschnitt gezeigt ist, bei dem die erfindungsgemäßen Mittel nicht eingesetzt werden, ohne weiteres erklärbar. Durch das herkömmliche Fenster 17 tritt die Sonnenstrahlung 18 praktisch ungebrochen in den Raum 16 ein und projiziert die Fensteröffnung als übermäßig hellen Fleck auf den Raumboden 19. Da die Raumdecke 20 nicht spezifisch als Reflektor ausgebildet ist und die herkömmliche Neonleuchte 21 ihre Leuchtröhren 22 sehr nahe unterhalb der Raumdecke 20 trägt, wird deren Licht praktisch nur direkt auf den unter ihr liegenden Bereich abgestrahlt. Ebenso wird die durch die Dachkuppel 23 einfallende Sonnenstrahlung 24 direkt und indirekt in den Raum 16 abgestrahlt, wo sie einen bestimmten Bereich aufhellt.

Diese Gegebenheiten führen zu der hinlänglich bekannten Tatsache, dass ein herkömmlich ausgestatteter Raum 16 drei sich gegenüber dem restlichen Raum in ihrer Helligkeit stark unterscheidende Bereiche aufweist, von welchen sich jeder im direkten Bestrahlungsbereich der beschriebenen Strahlungsquellen: Fenster 17, Leuchte 21 und Kuppel 23, befindet. Eine gleichmässige Raumausleuchtung ist mit herkömmlichen Mitteln nur dadurch zu erreichen, dass übermässig einstrahlendes Sonnenlicht abgeschirmt wird und eine Vielzahl von künstlichen Lichtquellen an die Raumdecke gehängt werden.

Da aber Strahlungen im gesamten spektralen Bereich, von den Wärmestrahlen in Infrarot, bis hinauf zum UV-Bereich und selbst Schallwellen ähnliche oder identische Ausbreitungscharakteristiken aufweisen wie das sichtbare Licht, treffen obige Aussagen auch auf die durch die Sonne ausgesendeten und in den Raum 1 einstrahlenden Wärmestrahlen zu. Ebenso trifft dies auf im Raum 1 erzeugten Schall zu, der, wie anhand der Fig. 6 bis 9 noch gezeigt werden wird, an den Deckenelementen 6 diffus zurückgestrahlt wird.

Die Ausrüstung eines Raumes mit der erfindungsgemäßen Einrichtung bewirkt daher nicht nur eine bessere Verteilung des Lichtes, sondern auch eine verringerte Aufheizung einzelner Raumteile durch einfallende Somme und eine Reduktion des Geräuschpegels im Raum, durch diffuse Rückstrahlung der Schallwellen an den Deckenelementen.

Die Erfindung ermöglicht daher eine Reduktion der Beleuchtungskörper bei gleicher Raumhelligkeit, eine Reduktion der benötigten Kühlenergie zwecks Stabilisierung der Raumtemperatur und eine Reduktion des allgemeinen Geräuschpegels im Raum bei gleicher lokaler Schallerzeugung.

Anhand der nachfolgenden Beschreibung einzelner Ausführungsvarianten der diversen erfindungsgemässen Mittel zur Durchführung des erfindungsgemässen Verfahrens wird noch eingehender auf die Vorteile der Erfindung eingegangen.

Anhand von Fig. 3 ist ausschnittweise ein möglicher Aufbau eines Fensters gemäss der Erfindung erkennbar. Dieses besteht im wesentlichen aus einem herkömmlichen Fensterrahmen 25 mit Doppelverglasung aus zwei in Kittfugen 26 gehaltenen Glasscheiben 27 mit dazwischen angeordneten Reflektorelementen 28. Diese umfassen jeweils ein Trägerelement 29, Distanzhalter 30, sowie die eigentlichen Reflektoren 31.

Das auf die Reflektoren 31 fallende Licht wird in gesteuerter Form diffus in die Raumtiefe umgleitet, wie dies anhand der Strahlengänge 32, 33 und 34 und drei Reflektoren 31 illustriert ist, wobei in jedem Reflektor 31 jeder der hier anhand von drei Reflektoren 31 gezeigten Strahlengänge 32, 33 und 34 vorkommt, was zu einer sehr starken, steuerbaren Verteilung des intensiven einstrahlenden Lichtes führt.

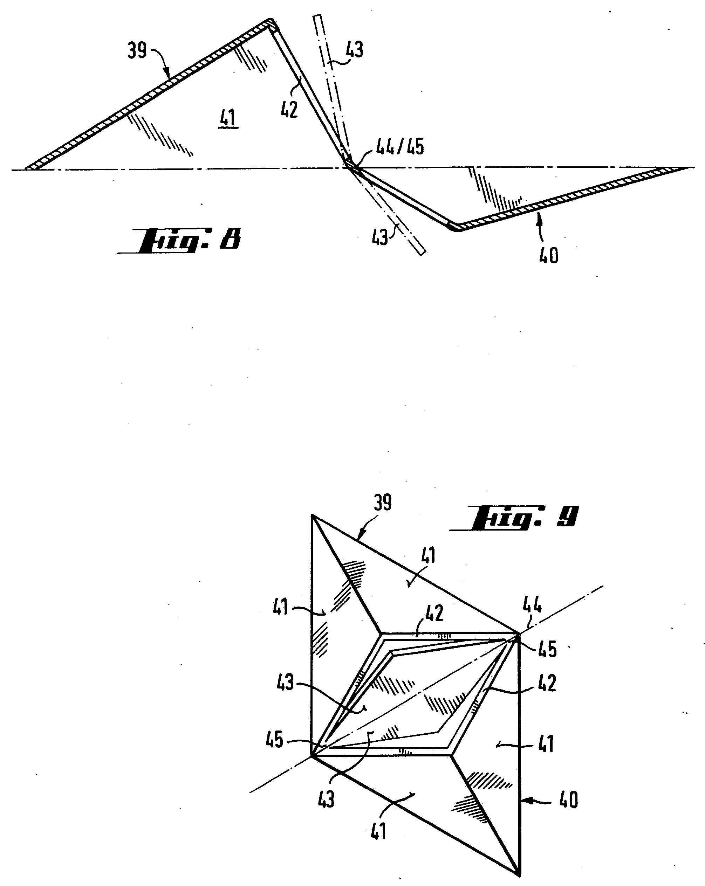

Vorteilhafterweise sind die Reflektoren 31 dabei in stab-förmigen Trägerelemente 29 eingebettete verspiegelte Vertiefungen, deren Oberflächen eine Vielzahl von diffusierenden Strukturen aufweisen. Die Vertiefungen, respektive Reflektoren 31 können dabei verschiedene Formen aufweisen, wie dies aus Fig. 4 hervorgeht, wo sie im Teil A calottenförmig, im Teil B mandelförmig und im Teil C bananenförmig sind. Die die Reflektoren 31 umgebenden Oberflächen 35 der Träger-elemente 29 weisen vorteilhafterweise die selbe Struktur auf wie die Oberflächen der Reflektoren 31 und sind ebenfalls verspiegelt. Jede Reflektorenform weist spezifische Lichtumlenkcharakteristiken auf, wie dies in der unteren Hälfte von Fig. 4 angedeutet ist.

Die Trägerelemente 29 sind im Fenster zwischen den Glasscheiben 27 übereinander angeordnet und ruhen auf den Distanzhaltern 30, respektive sind mit diesen verbunden, wobei diese vorteilhafterweise aus volltransparentem, lichtbeständigem Material bestehen. Beidseitig am Ende der vorteilhafterweise quer durch das ganze Fenster verlaufenden Trägerelemente 29 sind sie mittels Befestigungsteilen 36 mit zu einem rund um das Innere des Fensterrahmens 25 herumlaufenden Rahmen verbundenen Gleitschienen 37 verbunden.

Abhängig vom breitengradbedingten mittleren Sonnenstand und dem gewünschten Wirkungsgrad der Steuerung, respektive dem in diffuse Strahlung umzuwandelnden Anteil der gesamten auf das Fenster auftreffenden parallelen Sonnenstrahlung, wird die vertikale Distanz a zwischen den Trägerelementen 29, resp. Reflektorenreihen und der Neigungswinkel $\alpha$ der Achse der Reflektoren 31 gegenüber der Horizontalen gewählt. Ferner ist die optimale Breite b der Trägerelemente 29 in Abhängigkeit des maximal zulässigen Sperrwinkels $\beta$ festzulegen, welcher Sperrwinkel $\beta$ gemeinsam mit der Distanz a bestimmt, welchen Sichtkontakt eine sich im Raum befindliche Person mit der Aussenwelt haben kann.

In der Praxis hat sich gezeigt, dass folgende Werte für mitteleuropäische Verhältnisse gute Ergebnisse zeitigen:

$$a = 25 \text{ mm} ; \quad b = 38 \text{ mm} ; \quad \alpha = 6° ; \quad \beta = 27°.$$

Der Fachmann erkennt, dass das beschriebene Fenster das Licht, respektive die Gesamtstrahlung nicht nur in der Vertikalebene steuert, sondern auch horizontal, wird doch die scheinbare Bewegung der Sonne teilweise in dem Sinne korrigiert, dass eine Teilumlenkung in der entgegengesetzten Richtung zur Sonnenbewegung erfolgt. Diese Korrektur der Einstrahlung erfolgt somit in der ditten Dimension. Ausserdem erfolgt eine automatische Mengenregulierung, da bei zunehmender Sonnenstandshöhe eine Reduzierung der bestrahlten Reflektionsfläche in reziproker Wirkung entsteht, damit also eine quantitative Verringerung der eingestrahlten Strahlungsmenge. Die Wirksamkeit der Umlenkung ist umgekehrt proportional dem Winkel der Sonnenstandshöhe. Auch bei trübem, bewölktem Himmel ist eine Verbesserung der Energieverteilung im Raum gegeben, und dies insbesondere durch Kombination des erfindungsgemässen Fensters mit den erfingungsgemässen Deckenelementen gemäss den Fig. 6 bis 9.

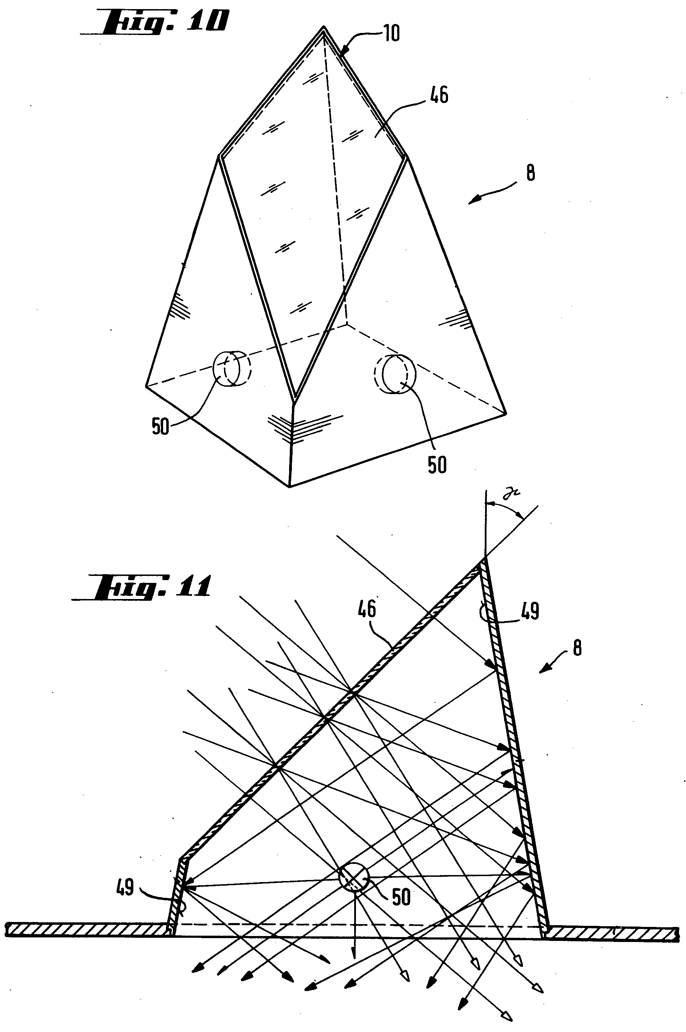

Fig. 5 zeigt schematisch eine andere Ausführungsform eines Trägerelementes 29' mit Reflektoren 31', welches Trägerelement 29' unterhalb der Reflektoren 31' als Hohlkörper in Form eines Kannales 38 ausgebildet ist und als Absorber für einem Teil der Wärmeeinstrahlung dient. Die entstehende Stauwärme kann bei dieser Ausführungsform mittels einem flüssigen oder gasförmigen Medium, z. B. Luft, abgeführt und für andere Zwecke, z. B. Kühlzwecke, verwendet werden.

Wie aus der Beschreibung der Fig. 1 hervorgeht, erbringt die Verwendung des in Figuren 3 bis 5 gezeigten Fensters nur in Verbindung mit den erfindungsgemäßen Deckenelementen das erwartete Ergebnis. Ein solches Deckenelement 6 ist in Fig. 6 von unten gesehen dargestellt. Es weist eine Oberfläche mit einer Dreiecks-Pyramidenstruktur auf, mit erhöhten und versenkten Dreiecks-Pyramiden 39 resp. 40 in Reihen derart, daß erhöhte und versenkte Pyramiden 39 und 40 wechselseitig in jeder Richtung abwechseln. Jede Dreiecks-Pyramide 39 und 40 weist zwei seitliche Dreiecksflächen 41 und eine hintere Dreiecksfläche 42 auf. Im Raum ist das Deckenelement 6 derart zu montieren, daß die seitlichen Dreiecksflächen 41 in den erhöhten Dreiecks-Pyramiden 39 in Richtung des Fensters weisen, wogegen die hinteren Dreiecksflächen 42 der erhöhten Pyramiden 39 in den Raum weisen. Vorteilhafterweise sind die erhöhten und versenkten Dreiecks-Pyramiden 39 und 40 identisch. Die Kanten, an denen die verschiedenen Dreiecksflächen 41 und 42 zusammentreffen, sollten möglichst schîrf sein.

Die Dimensionierung der Dreiecks-Pyramiden 39 und 40 ist in Abhängigkeit der Raumverhältnisse derart wählbar, daß eine optimale Streuung des auf die Deckenelemente 6 fallenden Lichtes, stamme dies nun von den Reflektoren 31 des Fensters 2 oder von Leuchten 21, erreicht wird. Zudem kann durch eine sorgfältige Dimensionierung der Dreiecks-Pyramiden 39 und 40 der Deckenelemente 6 eine gewünschte Diffusierung von Schallwellen erreicht werden, derart, dass trotz starken im Raum vorhandenen Lärmquellen ein psychologisch tragbarer Phonpegel realisierbar ist.

In der Praxis hat sich gezeigt, dass sich Norm-Deckenelemente 6 von 62,5 cm × 62,5 cm, auf welchen je 36 ganze und halbe Dreiecks-Pyramiden 39 und 40 angeordnet sind, sehr gut eignen. Die Dreiecks-Pyramiden 39 und 40 weisen dabei vorteilhafterweise folgende Masse auf : Höhe Basis-Spitze = 2,8 cm, Breite = 10,4 cm und Länge = 10,4 cm. Derartige Deckenelemente 6 lassen sich gut aus Gips Kunststoff oder Metallblech formen und weisen vorteilhafterweise eine rauhe mattweisse Oberfläche auf.

Aus Metallblech gefertigte Deckenelemente lassen sich, wie dies aus den Fig. 7, 8 und 9 ersichtlich ist, vorteilhafterweise an den hinteren Dreiecksflächen 42 der Dreiecks-Pyramiden 39 und 40 mit schwenkbaren dreieckigen Klappen 43 versehen, die durch Stanzung erzeugbar sind und sich um die als Drehachse 44 verbleibenden nicht geschnittenen Verbindungen 45 schwenken lassen, derart, dass die Deckenelement-oberfläche mit Oeffnungen versehen werden können, die bis zu 24 % der Gesamtoberfläche ausmachen können, ohne dass dadurch aber die für die Diffusierung benötigte Gesamtfläche verringert wird.

Dadurch lässt sich der Schalldämmungswirkungsgrad des Dekkenelementes nach Fig. 6 nochmals ganz wesentlich erhöhen und insbesondere auch nach der Installation der Decke in einem Raum nachträglich einstellen und sogar lokalen Lärmverhältnissen anpassen, was bis anhin mit den herkömmlichen Schalldämm-Deckenplatten unmöglich war. Zudem lassen sich die durch das Verschwenken der Klappen 43 erzeugten Oeffnungen für Be- und Entlüftungszwecke bestens verwenden.

Dem Fachmann ist aufgrund des oben gesagten klar, dass dem Deckenelement gemäss der Erfindung bei der Lösung der dieser zugrundeliegenden Aufgabe eine entscheidende Rolle zukommt. Dies nicht nur bezüglich einer optimalen Beleuchtung des Raumes durch Reflektion des auf es fallenden Lichtes und Schalldämmung, sondern auch bezüglich des Raumklimas, insbesondere einer Stabilisierung der Raumtemperatur auch bei intensivem Sonnenschein, wird doch die Wärmestrahlung, ähnlich wie die Lichtstrahlung, durch die Reflektoren 31 des Fensters auf eine verhältnismässig grosse Fläche reflektiert, respektive geworfen, welche Fläche aus Deckenelementen besteht, die durch ihre Struktur eine zusätzliche Oberfläche aufweist und ohne weiteres in der Lage ist, selbst eine grosse durch das Fenster in den Raum einstrahlende Wärmemenge ohne merkliche Temperaturerhöhung zu absorbieren und abzuleiten. Dadurch wird eine sonnenscheinbedingte Erwärmung des Raumes weitestgehend vermieden und die Verwendung von Klima- und Kühlgeräten in Büros, Fabrikations- und auch Wohnräumen überflüssig, ohne dass dies durch ein Abschirmen des Fensters vor der Sonne und demnach ein Verdunkeln des Raumes erkauft werden muss.

Bei in Flachdach-Gebäuden zuoberst liegenden Räumen und insbesondere bei eingeschossigen Fabrikations- oder Verkaufsräumen mit Flachdach, wo herkömmlicherweise aufgrund der grossen überbauten Grundfläche eine genügende Raumbeleuchtung ohne künstliche Lichtquellen unmöglich ist, bietet die Gegenstand der Erfinfung bildende Dachkuppel 8 nach den Fig. 10 und 11, vorteilhefterweise in Kombination mit dem erfindungsgemässen Fenster und dem erfindungsgemässen Deckenelement sowie gegebenenfalls der anhand von Fig. 12 beschriebenen Neonleuchte, die Möglichkeit, im gesamten Raum eine genügende Beleuchtung mit Tageslicht zu gewährleisten.

Diese Dachkuppel 8 weist die Form eines Pyramidenstumpfes mit schräg abgeschnittener Spitze auf und wird vorteilhafterweise mit einer Glasscheibe 46 abgedeckt. Um eine optimale Wirkung zu erzielen, wird sie vorteilhafterweise in Gruppen eingesetzt, wobei ihre Glasscheibe 46 zwischen östlicher, südlicher und westlicher Orientierung angeordnet wird. Die Wandinnenseiten 49 müssen, ähnlich wie die Oberflächen der Deckenelemente 6, mattweiss und vorteilhafterweise leicht rauh sein, um gute Reflexions- und Diffusierungseigenschaften aufzuweisen.

Anhand von Fig. 11 ist schematisch dargestellt, wie der Strahlengang von auf die Glasscheibe 46 auftreffendem Licht in der Kuppel 8 ist. Gleichzeitig illustriert diese Figur auch den Strahlengang von zwei innen in der Dachkuppel 8 angeordneten Leuchten 50 gemäss Fig. 10. Daraus ersieht der Fachmann leicht, dass diese Dachkuppel 8,

entgegen den herkömmlichen Dachkuppeln und Sheddächern bereits sehr flach einfallendes Licht in den Raum umlenkt, da solches Licht von den Wandinnenseiten 49 in den Raum reflektiert wird.

Der Neigungswinkel der Glasscheibe ist von der geografischen Breite, wo die Kuppel eingesetzt werden soll, unabhängig, denn je kleiner er ist, umso mehr flach einfallendes Licht wird erfasst. Für mitteleuropäische Verhältnisse mit einem mittleren Sonnenstand von 30° hat sich eine Neigung von 45° als optimal erwiesen. Als Grundfläche des Pyramidenstumpfes eignet sich ein Quadrat von 1,2 bis 1,8 m Seitenlänge sehr gut.

Ein weiteres wesentliches Mittel zur Lösung der der vorliegenden Erfindung zugrundeliegenden Aufgabe ist in Fig. 12 dargestellt. Es handelt sich um eine künstliche Lichtquelle in Form einer Neonleuchte 21, welche unter oder zwischen die Deckenelemente 6 montiert wird und eine gegenüber herkömmlichen Installationen gleicher Leistung eine wesentlich verbesserte und wirkungsvollere Raumbeleuchtung ermöglicht. Die bekannten Neonleuchten sind so konstruiert, dass das von ihnen erzeugte Licht vorwiegend oder ausschliesslich nach unten und seitwärts abgestrahlt wird, sodass im wesentlichen der direkt unterhalb der Leuchte liegende Raumteil erhellt wird. Dabei wird, insbesondere bei doppelröhrigen Leuchten, eine punktuell häufig überbelichtete Zone im Raum geschaffen. Um zu grosse Helligkeitsunterschiede zu vermeiden, werden daher einerseits eine Vielzahl von Neonleuchten in einen Raum gehängt und diese andererseits mit stark lichtabsorbierenden Kunststoffrosten abgedeckt. Dies führt dazu, dass die mittlere Raumhelligkeit in keinem vernünftigen Verhältnis zu der benötigten Energie und effektiven Lichtleistung der Leuchtröhren steht.

Dieser Missstand wird durch die erfindungsgemässe Neonleuchte 21 in Verbindung mit den erfindungsgemässen Deckenelementen 6 beseitigt, und mit wesentlich weniger Energie eine merklich bessere Beleuchtung in einem vergleichbaren Raum geschaffen. Die erfindungsgemässe Neonleuchte 21 weist, entgegen den herkömmlichen Neonleuchten eine, vorteilhafterweise zwei untereinander angeordnet Leuchtröhren 22 auf, die möglichst weit unterhalb der Deckenelemente 6 liegen. Diese Leuchtröhren 22 sind von einem Licht diffusierenden Gehäuse 51, beispielsweise aus synthetischem Milchglas, umgeben, derart, dass die parallelen Lichtstrahlen der Leuchtröhren 22 diffus in dem Raum abgestrahlt werden. Dadurch, dass sich die Leuchtröhren 22 in einem gewissen Abstand von den Deckenelementen 6 befinden, werden diese in einem relativ grossen Bereich angestrahlt und reflektieren ihrerseits das von den Leuchtröhren 22 erzeugte Licht diffus in einen grossen Teil des Raumes. Dadurch wird eine übermässige Beleuchtung eines kleinen Raumbereiches vermieden und im Gegensatz dazu eine für das Auge angenehme generelle Raumbeleuchtung erzielt. Es sind weniger, ca. 20 % weniger Neonleuchten 21 notwendig, um einen definierten Raum mit einer vorbestimmten Luxzahl auszuleuchten, als bei herkömmlichen Neonleuchten und Deckenelementen. Dadurch ist eine merkliche Stromersparnis realisierbar.

In der Praxis hat sich erwiesen, dass mit Neonröhren 22 von 40 Watt, von welchen die obere ca. 15 cm und die untere ca. 25 cm von den Deckenelementen 6 abgesetzt sind, sehr gute Ergebnisse erzielt werden.

Aufgrund der obigen Beschreibung ist leicht zu ersehen, daß die Deckenelemente 6 den Kern der erfinderischen Idee darstellen; diese Deckenelemente können für sich eingesetzt werden, wenn in einem fensterlosen Raum eine künstliche Beleuchtung, vorzugsweise durch eine mit Reflektoren versehene Neonleuchte 21 vorgesehen ist. Soll der Eintritt von Strahlen einer außerhalb des Raumes 1 gelegenen Strahlungsquelle 3 in den Raum erfolgen, so werden die Deckenelemente 6 mit geeigneten bekannten oder vorzugsweise den erfindungsgemäßen Reflektoren in einem Fenster 2 und/oder einer Dachkuppel 8, die ebenfalls vorzugsweise gemäß der vorliegenden Erfindung ausgestaltet ist, kombiniert, um eine optimale Lösung der der Erfindung zugrunde liegenden Aufgabe zu erreichen. Die Dachkuppel 8 kommt vorzugsweise dann zum Einsatz, wenn der Raum 1 im obersten Stockwerk eines Gebäudes liegt, das vorzugsweise ein Flachdach aufweist.

Ferner erkennt der Fachmann, dass es dank des erfindungsgemässen Verfahrens der Steuerung aller natürlichen Strahlungsenergien im spektralen Bereich in einem Raum erstmals möglich ist, diese gezielt für die Erzeugung einer optimalen Behaglichkeit im Raum einzusetzen, ohne sie teil-weise vom Raum abzuschirmen, oder sie zu vernichten und dafür durch zusätzliche, mittels Fremdenergie erzeugten Strahlungen vergleichbare Bedingungen zu schaffen. Es darf daher ohne weiteres festgestellt werden, dass die Erfindung nicht lediglich der Schaffung möglichst optimaler Behaglichkeitsbedingungen dient, sondern zusätzlich die Einsparung von ganz wesentlichen Fremdenergiemengen ermöglicht, indem sie beispielsweise Klimaanlagen ohne Einbusse an Behaglichkeit, überflüssig macht.

## Ansprüche

1. Verfahren zur Verteilung der Strahlungsenergie im gesamten spektralen Bereich, welche in einem Raum einstrahlt oder in ihm erzeugt wird und mittels Reflexions-flächen (41, 42) im Bereich der Raumdecke (5) reflektiert und zusätzlich mittels in einem Fenster (2) angeordneter Reflektoren (4) diffus und gezielt zur Decke (5) des Raumes (1) gelenkt wird, dadurch gekennzeichnet, daß sowohl einerseits im Raum (1) selbst erzeugte Strahlen (15) als auch andererseits durch das Fenster (2) eingestrahlte, durch die Reflektoren (4) in Richtung der Raumdecke (5) umgelenkte Strahlen (3a) im Bereich der Raumdecke (5) durch als Pyramiden mit dreieckiger Basis, und mit abwechselnd nebeneinander erhobener und vertiefter Spitze ausgebildete Reflektoren (39, 40) vorwiegend nach hinten in die Tiefe des Raumes und seitwärts in die Raumbreite umgelenkt werden.

2. Einrichtung zur Durchführung des Verfahrens nach Anspruch 1, dadurch gekennzeichnet, daß zum Verteilen der in den Raum (1) eingestrahlten oder in ihm erzeugten Energie zumindest ein im Bereich der Raumdecke (5) angeordnetes Deckenelement (6) aus einer Reihe von Reflektoren (39, 40) in Gestalt von Pyramiden mit dreieckiger Basis so angeordnet ist, daß zwei der Basiskanten jeder Pyramide (40) mit aus der Decke in das Rauminnere hineinragender Spitze mit den Basiskanten der Pyramiden (39) gemeinsam sind, deren Spitze vom Rauminneren weg nach außen zu liegt.

3. Einrichtung nach Anspruch 2, dadurch gekennzeichnet, daß eine der Seitenwände des Raumes (1) ein doppelt verglastes Fenster (2) aufweist, in welchem übereinander angeordnete Reflektoren (4) mit einer verspiegelten Oberfläche vorgesehen sind, und daß die Reflektoren (4) als Trägerelemente (29) mit schalenförmigen Reflektorteilen (31) mit nach oben gerichteten diffusierend strukturierten verspiegelten Oberflächen (35) ausgebildet sind.

4. Einrichtung nach Anspruch 3, dadurch gekennzeichnet, daß die Trägerelemente (29) aus transparentem Kunststoff bestehen.

5. Einrichtung nach Anspruch 3, dadurch gekennzeichnet, daß die Trägerelemente (29') mit einem Hohlkanal (38) versehen und als kombinierte Reflektions- und Absorptionselemente ausgebildet sind, die mit flüssigen oder gasförmigen Medien kühlbar sind.

6. Einrichtung nach Anspruch 4, dadurch gekennzeichnet, daß die Reflektoren (31) als Vertiefungen, vorzugsweise von kalotten-, Mandel- oder Bananenform, in der die Reflektoren tragenden Oberfläche (35) der Trägerelemente (29) ausgebildet sind.

7. Einrichtung nach Anspruch 2, dadurch gekennzeichnet, daß das Deckenelement (6) mehrere Reihen nebeneinander liegender erhöhter und versenkter Dreiecks-Pyramiden (39 ; 40) aufweist, derart, daß jeweils die hinteren Dreiecksflächen (42) der erhöhten Prismen (39) an die hinteren Dreiecksflächen (42) der versenkten Prismen (40) anschließen.

8. Einrichtung nach Anspruch 7, dadurch gekennzeichnet, daß die Dreiecks-Pyramiden (39 ; 40) zwei gleiche, an die hinteren Dreiecksflächen (42) symmetrisch anschließende seitliche Dreiecksflächen (41) aufweisen.

9. Einrichtung nach Anspruch 7 oder 8, dadurch gekennzeichnet, daß die Deckenelemente (6) aus Gips gefertigt sind.

10. Einrichtung nach Anspruch 7 oder 8, dadurch gekennzeichnet, daß die Deckenelemente (6) aus Metallblech gefertigt sind.

11. Einrichtung nach Anspruch 10, dadurch gekennzeichnet, daß aus den hinteren Dreiecksflächen (42) Klappen (43) ausgestanzt sind, derart, daß sie über Verbindungen (45) in einer Drehachse (44) sowohl untereinander als auch mit den Dreiecksflächen (42) verbunden und um diese Drehachse zwecks individueller Einstellbarkeit der Öffnungen schwenkbar sind.

12. Einrichtung nach Anspruch 2, in welcher unterhalb der Raumdecke (5) im Raum (1) eine Strahlungsquelle (12) angeordnet ist, dadurch gekennzeichnet, daß die Strahlungsquelle (12) mit diffus nach oben in Richtung der Raumdecke (5) reflektierenden Reflektoren (14) versehen ist.

13. Einrichtung nach Anspruch 12, dadurch gekennzeichnet, daß die Strahlungsquelle (12) als Leuchtstoffröhrenleuchte (21) mit zumindest einer senkrecht von der Raumdecke (5) abgesetzten Leuchtröhre (13) ausgebildet ist, welche von einer Licht diffusierenden Abdeckung (51) umgeben ist.

14. Einrichtung nach Anspruch 13, dadurch gekennzeichnet, daß zwei Leuchtstoffröhren (13 ; 22) mit einer Halterung derart verbunden sind, daß nach Montage der Leuchtstoffröhrenleuchte (12 ; 21) an der Raumdecke (5) die obere der beiden Leuchtstoffröhren (13 ; 22) ungefähr 15 cm und die untere Leuchtstoffröhre ungefähr 25 cm unterhalb der Spitzen der in den Raum (1) hineinragenden Dreieck-Pyramiden (40) zu liegen kommen.

15. Einrichtung nach einem der Ansprüche 2 bis 5, mit einer oberhalb einer Öffnung in der Raumdecke (5) angeordneten Dachkuppel (8), dadurch gekennzeichnet, daß die Dachkuppel (8) als Pyramidenstumpf, von annähernd quadratischem Querschnitt mit schräg abgeschnittener, und durch ein Fenster (10) abgedeckter Spitze ausgebildet ist.

16. Einrichtung nach Anspruch 15, dadurch gekennzeichnet, daß der Pyramidenstumpf in Richtung einer Diagonalen des Grundrisses schräg abgeschnitten ist.

## Claims

1. Method for spreading the radiation energy of the total spectrum which irradiates into a room or is produced therein and which is reflected by means of reflection surfaces (41, 42) in the area of the room ceiling (5) and which, in addition, is directed diffusely and controlled towards the ceiling (5) of the room (1) by means of reflectors (4) being arranged in a window (2), characterized in that, on the one hand, rays (15) being produced in the room (1) itself as well as, on the other hand, rays (3a) being irradiated through the window (2), deflected by the reflectors (4) towards the room ceiling (5) in the area of the room ceiling (5) by reflectors (39 ; 40) designed as pyramids with a triangular base and with alternatingly projected and indented points side by side are mainly deflected towards the rear into the depth of the room and sidewards into the width of the room.

2. Means for practicing the method according to Claim 1, characterized in that for spreading the energy irradiated into the room (1) or produced therein at least one ceiling element (6) arranged in the area of the room ceiling (5) consisting of a series of reflectors (39, 40) in the shape of pyramids with triangular bases is arranged in such a way that two of the base edges of each pyramid (40) are in common with the base edges of the pyramids (39) with points protruding from the ceiling into the interior of the room, the points of which lying outwardly averted from the interior of the room.

3. Means according to Claim 2, characterized in that one of the side walls of the room (1) has a doubleglazed window (2), in which reflectors (4) arranged one upon the other with a mirror-like surface are provided and that the reflectors (4) are designed as supporting elements (29) with cup-like reflector parts (31) with upwardly directed diffusingly structured mirror-like surfaces (35).

4. Means according to Claim 3, characterized in that the supporting elements (29) consist of transparent synthetic material.

5. Means according to Claim 3, characterized in that the supporting elements (29′) are provided with a hollow duct (38) and designed as combined reflection and absorption elements which can be cooled by liquid or gaseous media.

6. Means according to Claim 4, characterized in that the reflectors (31) are designed as indentations, preferably of a cup, almond or banana shape, which are arranged in the supporting surface (35) of the supporting elements (29) representing the reflectors.

7. Means according to Claim 2, characterized in that the ceiling element (6) has several rows of elevated and indented triangular pyramids (39 ; 40) lying side by side in such a way that in each case the rear triangular surfaces (42) of the elevated prisms (39) are adjacent to the rear triangular surfaces (42) of the indented prisms (40).

8. Means according to Claim 7, characterized in that the triangular pyramids (39 ; 40) have two lateral triangular surfaces (41) which are equal and symmetrically adjacent to the rear triangular surfaces (42).

9. Means according to Claim 7 or 8, characterized in that the ceiling elements (6) are made of plaster.

10. Means according to Claim 7 or 8, characterized in that the ceiling elements (6) are made of metal sheet.

11. Means according to Claim 10, characterized in that flaps (43) are punched out of the rear triangular surfaces (42) in such a way that they are connected via links (45) in a rotation axis (44) with each other as well as with the triangular surfaces (42) and that they are tiltable around this axis of rotation for the pupose that the openings are individually adjustable.

12. Means according to Claim 2, in which there is arranged a radiation source (12) beneath the room ceiling (5) in the room (1), characterized in that the radiation source (12) is provided with reflectors (14) diffusely reflecting upwards in direction of the room ceiling (5).

13. Means according to Claim 12, characterized in that the radiation source (12) is designed as fluorescent lamp (21) with at least one tube (13) stepped vertically from the room ceiling (5), the tube being surrounded by a light diffusing covering (51).

14. Means according to Claim 13, characterized in that two tubes (13 ; 22) are connected by a clamping fixture in such a way that after mounting the fluorescent lamp (12 ; 21) at the room ceiling (5) the upper one of the two tubes (13 ; 22) comes to lie approximately 15 cm and the lower tube approximately 25 cm below the points of the triangular pyramids (40) protruding into the room (1).

15. Means according to one of the Claims 2 to 5, with a roof dome (8) arranged above an opening in the room ceiling (5), characterized in that the roof dome (8) is designed as frustrum of a pyramid with an approximately square cross-section and with a slopingly cut point that is covered by a window (10).

16. Means according to Claim 15, characterized in that the frustrum of the pyramid is slopingly cut in the direction of one diagonal line of the plan view.

**Revendications**

1. Procédé pour répartir l'énergie rayonnante de tout le spectre qui fait incidence dans une chambre où bien y est produite et qui est réfléchie au niveau du plafond (5) à l'aide des surfaces de réflexion (41, 42), et qui est en plus diffusée en direction du plafond (5) de la chambre (1) par des réflecteurs (4) placés dans une fenêtre (2), procédé caractérisé en ce que les rayons (15) produits dans la chambre (1) même, ainsi que les rayons (3a) pénétrant par la fenêtre (2) et déviés par les réflecteurs (4) en direction du plafond (5), sont déviés au niveau du plafond (5) par des réflecteurs (39, 40) qui ont la forme des pyramides avec des bases triangulaires et des sommets alternativement saillants et noyés, surtout vers le fond de la chambre ou bien aux côtés de la chambre.

2. Installation pour la réalisation du procédé selon la revendication 1, caractérisée en ce qu'en vue de répartir l'énergie qui fait incidence dans la chambre ou bien y est produite, au moins un des éléments de plafond (6) situé au niveau de ce dernier (5) ou d'une rangée des réflecteurs (39, 40) ayant la forme des pyramides avec des bases triangulaires, est placé de façon que deux des arêtes de base de chaque pyramide (40) avec le sommet saillant du plafond vers l'intérieur de la chambre soient identiques avec les arêtes de base des pyramides (39) dont le sommet est saillant au sens inverse.

3. Installation selon la revendication 2, caractérisée en ce qu'une des parois latérales de la chambre (1) est pourvue d'une fenêtre à deux vitres dans laquelle sont prévus des réflecteurs (4) superposés et ayant une surface réfléchissante, et caractérisée en ce que les réflecteurs (4) sont construits comme éléments porteurs (29) avec des parties de réflecteur (31) en forme de cuvette dont les surfaces réfléchissantes à structure diffusante (35) sont dirigées en haut.

4. Installation selon la revendication 3, caractérisée en ce que les éléments porteurs (29) consistent en matière artificielle transparente.

5. Installation selon la revendication 3, caractérisée en ce que les éléments porteurs (29) sont pourvus d'un canal creux (38) et ont en même temps la fonction d'éléments de réflexion et d'absorption qu'on peut refroidir à l'aide des milieux liquides ou gazeux.

6. Installation selon la revendication 4, caractérisée en ce que les réflecteurs (31) sont construits comme approfondissements des surfaces (35) des éléments porteurs (29), de préférence en forme de calotte, d'amande ou de banane.

7. Installation selon la revendication 2, caractérisée en ce que l'élément de plafond (6) est pourvu de plusieurs rangées des pyramides triangulaires saillantes et noyées, placées l'une à côté de l'autre (39, 40) de façon que les surfaces triangulaires arrières (42) des prismes saillants rejoignent les surfaces triangulaires arrières des prismes noyés.

8. Installation selon la revendication 7, caractérisée en ce que les pyramides triangulaires (39, 40) sont pourvues de deux identiques surfaces triangulaires (42) qui joignent symétriquement les surfaces triangulaires arrières (41).

9. Installation selon la revendication 7 ou 8, caractérisée en ce que les éléments de plafond (6) sont faits en plâtre.

10. Installation selon la revendication 7 ou 8, caractérisée en ce que les éléments de plafond (6) sont faits en tôle métallique.

11. Installation selon la revendication 10, caractérisée en ce que les volets (43) sont découpés des surfaces triangulaires arrières (42) de manière qu'ils soient joints d'une part l'un avec l'autre par des pièces de jointure (45) dans un pivot (44), que d'autre part avec les surfaces triangulaires (42) et qu'ils puissent être pivotés autour de ce pivot en vue d'ajuster individuellement les ouvertures.

12. Installation selon la revendication 2 dans laquelle est placée au-dessous du plafond (5) dans la chambre (1) une source de rayonnement (12), caractérisée en ce que celle-là est pourvue des réflecteurs (14) réfléchissant la lumière de manière diffuse en direction du plafond (5).

13. Installation selon la revendication 12, caractérisée en ce que la source de rayonnement (12) est construite comme tube fluorescent (21) avec au moins une lampe tube (13) placée à distance du plafond (5) et entourée par un recouvrement (51) diffusant la lumière.

14. Installation selon la revendication 13, caractérisée en ce que deux lampes tubes sont jointes à l'aide d'un fixage de manière qu'après la mise en place du tube fluorescent (12, 21) au plafond (5) l'une de deux lampes tubes (13, 22) soit placée environ 15 cm et l'autre environ 25 cm au-dessous des sommets des pyramides triangulaires (40) saillantes dans la chambre (1).

15. Installation selon une des revendications 2-5, avec un toit en coupole placé au-dessus d'une ouverture du plafond (5), caractérisée en ce que le toit en coupole (8) a la forme d'une pyramide tronquée avec une section transversale presque quadratique et avec un sommet tronqué obliquement et recouvert par une fenêtre (10).

16. Installation selon la revendication 15, caractérisée en ce que la pyramide et tronquée au sens d'une diagonale du plan horizontal.

_Fig. 1_

_Fig. 2_

# *Fig. 3*

Fig. 4.

Fig. 4·A

Fig. 4·B

Fig. 4·C

Fig. 5

3

*Fig. 6*

*Fig. 7*

39

41

42

43

44/45

43

40

*Fig. 8*

39

*Fig. 9*

41

41

42

44

45

43

43

42

45

41

40

41

*Fig. 10*

*Fig. 11*

_Fig. 12_